# EUROPÄISCHE PATENTSCHRIFT

(11) **EP 0 485 763 B1**
(45) Veröffentlichungstag und Bekanntmachung des Hinweises auf die Patenterteilung: **22.03.1995**
(21) Anmeldenummer: 91117834.1
(22) Anmeldetag: 18.10.1991
(51) Int. Cl.: C04B 41/71

(54) **Verfahren zum Schutz poröser Baustoffe gegen Tausalzeinflüsse**
Method for protecting porous building materials against the influence of ice-thawing salts
Procédé pour proteger les matériaux de construction poreux contre l'influence des sels anti-verglas

(30) Priorität: 07.11.1990 DE 4035406
(43) Veröffentlichungstag der Anmeldung: 20.05.1992
(73) Patentinhaber: Schmid, René P., CH-8165 Oberweningen (CH)
(72) Erfinder: Schmid, René P., CH-8165 Oberweningen (CH)
(74) Vertreter: Patentanwälte Dr. Solf & Zapf

(56) Entgegenhaltungen:
- EP-A- 0 388 391
- WO-A-88/01992
- GB-A- 1 218 533
- US-A- 1 970 857
- US-A- 2 306 570

## Beschreibung

Bei porösen Baustoffen besteht die Gefahr einer Zerstörung unter anderem durch ein Eindringen gelöster oder teilweise gelöster Salze, insbesondere sogenannter Frosttausalze. Durch die Verwendung von Frosttausalzen bzw. Tausalzen auf Straßen und Wegen ist es nicht zu vermeiden, daß Gebäudeaußenwände oder der wetterseitige Bereich anderer Bauten durch gelöste oder teilweise gelöste Tausalze verschmutzt werden. Insbesondere durch den Kraftfahrzeugverkehr auf gestreuten Straßen tritt diese Art der Verschmutzung regelmäßig auf. Bestehen die verschmutzten Bauten aus einem porösen Baustoff, dringen die Tausalze in gelöster und auch ungelöster Form in die Poren des Baustoffs ein. Sobald das Lösungsmittel der Salze, im Regelfall das Wasser, nicht mehr in flüssigem Zustand vorliegt, gehen die Salze wieder in einen kristallisierten Zustand über. Durch den Kristallisationsprozeß der Salze entsteht ein größerer Raumbedarf für die entstehenden Kristalle, so daß in den einzelnen Poren der entstehende Kristallisationsdruck Zerstörungen herbeiführen kann.

Diese zerstörende Wirkung von Tausalzen in porösen Baustoffen ist bekannt und es sind keine Maßnahmen bekannt, die porösen Baustoffe gegen solche Tausalzeinflüsse zu schützen. Lediglich gegen das Eindringen von Wasser sind einschichtige Imprägnierungen bekannt, wobei unter anderem auch Wachs verwendet wird, die aber das Eindringen von Salz nicht verhindern können.

Aus der DE-PS 36 30 520 ist ein Verfahren zur Verhütung von Farbauftragungen auf Flächen aus Natur- und Kunststein bekannt. Bei diesem bekannten Verfahren wird vorgeschlagen, auf einen imprägnierten Steineine farbaufnehmende, ablösbare Beschichtung, insbesondere in Form einer wachsartigen Beschichtung, aufzutragen. Sobald die Natur- oder Kunststeine durch Farbauftragungen, insbesondere in Form von sogenannten Graffitis, verschmutzt werden sollen, kann die Farbauftragung nur auf die Beschichtung erfolgen und dadurch entfernt werden, daß die Wachsschicht durch Wärme oder auf andere Art und Weise abgelöst wird. Die Imprägnierung verhindert dabei das Eindringen von Farbpartikeln in den Stein. Um den Stein nach Entfernung der Farbauftragungen wieder im Sinne der Erfindung zu schützen, muß anschließend die farbaufnehmende Beschichtung erneut aufgetragen werden.

Es ist Aufgabe der vorliegenden Erfindung, einen Schutz poröser Baustoffe gegen Tausalzeinflüsse vorzuschlagen.

Diese Aufgabe wird durch die Verwendung der an sich bekannten Imprägnierung und der anschließend aufgetragenen Wachsschicht auf die Oberfläche des porösen Baustoffes gelöst, wobei der aufzubringende Belag wasserdampfdiffusionsfähig ist, um die Wasserdampfdiffusionsfähigkeit der porösen Baustoffe nicht zu behindern.

Es ist überraschend, daß die an sich bekannte Kombination einer Imprägnierung mit einem darauf angeordneten Wachsbelag ein Eindringen von Ionen gelöster Salze bzw. Salze in gelöster Form sicher verhindert. Durch den Wachsbelag und die darunter angeordnete Imprägnierung können weder gelöste Salze noch Salze in Ionenform in den porösen Baustoff eindringen, wodurch eine Zerstörung der porösen Baustoffe durch das Ausfallen der Kristalle und den dadurch entstehenden Kristallisationsdruck in den Poren verhindert wird.

Ein sicherer Schutz der porösen Baustoffe gegen die Tausalzeinflüsse ist dann gegeben, wenn der vorgeschlagene Belag zumindest auf der zur Wetterseite weisenden, sichtbaren Oberfläche der porösen Baustoffe aufgebracht wird.

Vorteilhafterweise wird auf den porösen Baustoff eine wasserabweisende Imprägnierung aufgebracht.

Die Imprägnierung kann dabei als schichtartiger Belag in Form einer die Poren verschließenden Schichtimprägnierung und/oder zweckmäßigerweise in Form einer Porenimprägnierung aufgebracht werden.

Ein solcher schichtartiger oder die Porenoberfläche belegender Belag kann dabei auch für die Wachsschicht Verwendung finden.

Die Wachsschicht ist zweckmäßigerweise dünn, insbesondere in einer Stärke von 0,1 bis 0,5 mm aufgebracht, so daß durch die Wachsschicht die äußere Struktur der porösen Baustoffe erhalten bleibt und dennoch der angestrebte Effekt des Schutzes gegen Tausalzeinflüsse erhalten bleibt.

Liegen die porösen Baustoffe vor ihrer Verarbeitung als Einzelelemente, beispielsweise in Form von Ziegelsteinen, Fertigteilen oder ähnlichem vor, kann der vorgeschlagene Belag auch vor der Verarbeitung der Einzelelemente vollständig auf die gesamte Oberfläche aufgebracht werden. Die Einzelelemente können demnach nach ihrer Herstellung bereits vor Tausalzeinflüssen geschützt werden, wodurch ein nachträgliches Aufbringen des vorgeschlagenen Belages auf bereits erstellte Gebäudeteile entbehrlich wird.

## Patentansprüche

1. Verfahren zum Schutz poröser Baustoffe gegen Tausalzeinflüsse, bei welchem ein wasserdampfdiffusionsfähiger Belag aus einer Imprägnierung und einem darauf angeordneten Wachsbelag verwendet wird, der zumindest auf die zur Wetterseite weisende, sichtbare Oberfläche des porösen Baustoffes aufgebracht wird.

2. Verfahren nach Anspruch 1,
bei welchem eine wasserabweisende Imprägnierung aufgebracht wird.

3. Verfahren nach Anspruch 1 und/oder 2,
bei welchem eine Schichtimprägnierung und/oder eine Porenimprägnierung aufgebracht wird.

4. Verfahren nach einem oder mehreren der Ansprüche 1 bis 3,
bei welchem eine Wachsschicht oder ein die Porenoberfläche belegender Wachsbelag aufgebracht wird.

5. Verfahren nach Anspruch 4,
bei welchem die Wachsschicht dünn, insbesondere in einer Stärke von 0,1 bis 0,5 mm, aufgebracht wird.

6. Verfahren nach einem oder mehreren der Ansprüche 1 bis 5,
bei welchem als Einzelelemente vorliegende poröse Baustoffe vor ihrer Verarbeitung vollständig auf der gesamten Oberfläche mit dem Belag versehen werden.

## Claims

1. Process for the protection of porous building materials against the ingress of salts, in which a water vapour diffusion-permeable covering of a penetrating sealer and a layer of wax thereon, is applied to at least the visible surface of the building material exposed to the weather.

2. Process according to claim 1,
in which a water-repellent sealer is applied.

3. Process according to claims 1 and/or 2,
in which a layer-type sealer and/or a pore sealer is applied.

4. Process according to one or more of claims 1 to 3,
in which either a wax coating or a wax coating covering the surface of the pores is applied.

5. Process according to claim 4,
in which the applied wax coating is thin, in the range 0.1 to 0.5 mm.

6. Process according to one or more of claims 1 to 5, in which existing individual elements, made from the porous building material, are provided with a complete covering over the total surface, before fabrication.

## Revendications

1. Procédé pour protéger des matériaux de construction poreux contre l'influence des sels anti-verglas, dans lesquels on utilise un revêtement apte à la diffusion de vapeur d'eau formé par une imprégnation sur laquelle on a superposé une couche de cire, ledit revêtement étant appliqué au moins sur la surface du matériau de construction poreux visible et exposée aux pluies.

2. Procédé selon la revendication 1, dans lequel on applique une imprégnation hydrofuge.

3. Procédé selon la revendication 1 et/ou 2, dans lequel on applique une imprégnation sous forme de couche et/ou une imprégnation des pores.

4. Procédé selon une ou plusieurs des revendications 1 à 3, dans lequel on applique une couche de cire ou un revêtement de cire garnissant les surfaces des pores.

5. Procédé selon la revendication 4, dans lequel la couche de cire est appliquée sous forme mince, de préférence avec une épaisseur de 0,1 à 0,5 mm.

6. Procédé selon une ou plusieurs des revendications 1 à 5, dans lequel le matériau de construction poreux est utilisé sous forme d'éléments particuliers qui sont pourvus dudit revêtement sur leur surface totale avant leur utilisation.
